# EUROPÄISCHE PATENTSCHRIFT

(11) **EP 0 387 642 B1**
(45) Veröffentlichungstag und Bekanntmachung des Hinweises auf die Patenterteilung: **27.07.1994**
(21) Anmeldenummer: 90104142.6
(22) Anmeldetag: 03.03.1990
(51) Int. Cl.: C09B 67/22, C09B 29/085, D06P 1/04

(54) **Farbstoffmischung**
Mixture of dyes
Mélange de colorants

(30) Priorität: 15.03.1989 DE 3908445
(43) Veröffentlichungstag der Anmeldung: 19.09.1990
(73) Patentinhaber: CASSELLA Aktiengesellschaft, D-60386 Frankfurt (DE)
(72) Erfinder: Bühler, Ulrich, Dr., D-8755 Alzenau (DE); Kruse, Hubert, D-6233 Kelkheim (DE); Hähnke, Manfred, Dr., D-6233 Kelkheim (DE); Boos, Margareta, D-6234 Hattersheim (DE); Kühn, Reinhard, D-6000 Frankfurt am Main 50 (DE)
(74) Vertreter: Muley, Ralf, Dr.

(56) Entgegenhaltungen:
- EP-A- 0 222 255
- DE-A- 2 818 653
- DE-A- 2 936 489
- DE-A- 3 121 320

## Beschreibung

Die Erfindung betrifft eine Farbstoffmischung enthaltend oder bestehend aus
I: mindestens einem Farbstoff der Formel I 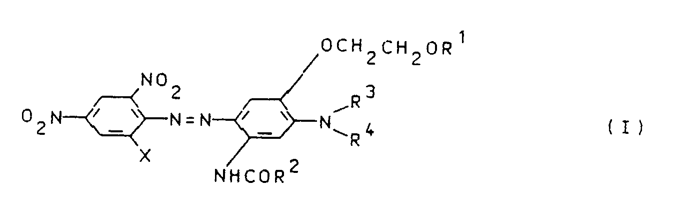
II: mindestens einem Farbstoff der Formel II 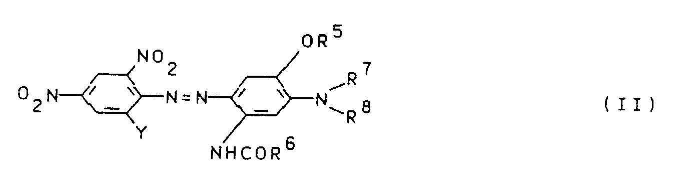 worin
   X und Y gleich oder verschieden sind und Chlor oder Brom,
   R¹ und R⁵ gleich oder verschieden sind und Methyl oder Ethyl,
   R² und R⁶ gleich oder verschieden sind und Methyl, Ethyl, n-Propyl oder i-Propyl,
   R³ und R⁴ gleich oder verschieden sind und Wasserstoff oder einen der unter R⁸ aufgeführten Reste,
   R⁷ und R⁸ gleich oder verschieden sind und C₁- bis C₁₁-Alkyl, das gegebenenfalls durch Chlor, Brom, Cyan, Phenyl, Phenoxy, Hydroxy, (C₁- bis C₄-Alkoxy)-carbonyl, Phenylcarbonyloxy, (C₃- bis C₅-Alkenyloxy)-carbonyloxy, (C₁- bis C₄-Alkoxy)-carbonyloxy, Phenoxy-carbonyloxy, Tetrahydrofurfuryl, (C₁- bis C₄-Alkyl-tetrahydrofurfuryl, Tetrahydropyronyl oder (C₁- bis C₄-Alkyl)-tetrahydropyronyl substituiert und/oder gegebenenfalls durch 1 - 3 O-Atome unterbrochen sein kann; C₁- bis C₄-Alkoxy; C₃- oder C₄-Alkenyl; Cyclohexyl; gegebenenfalls durch Chlor, Brom, Nitro, Cyan, C₁-bis C₄-Alkyl oder Alkoxy substituiertes Benzyl,
   R⁸ darüber hinaus auch noch (C₁ bis C₄-Alkyl)-carbonyloxy-(C₁ bis C₁₁)alkyl,
   bedeuten und wobei das Gewichtsverhältnis zwischen den Komponenten I : II = (5 bis 95) : (95 bis 5) beträgt.

Alkyl-, Alkoxy-, Alkenyl- oder Alkenyloxyreste können, auch wenn sie als Substituenten anderer Reste oder in Verbindung mit anderen Gruppen auftreten, geradkettig oder verzweigt sein. Bei Substitutionen können Einfach-oder Mehrfachsubstitutionen auftreten. Bei einer Mehrfachsubstitution ist eine Zweifachsubstitution bevorzugt.

Beispiele für geeignete Reste R⁷ und R⁸, die gegebenenfalls auch für R³ und/oder R⁴ stehen können, sind:
Methyl, Ethyl, n-Propyl, i-Propyl, n-Butyl, i-Butyl, sec.-Butyl, tert.-Butyl, n-Pentyl, i-Pentyl, n-Hexyl, i-Hexyl, 2,3-Dimethyl-butyl, n-Heptyl, i-Heptyl, n-Octyl, i-Octyl, 3-Methyl-heptyl, 2n-Nonyl, i-Nonyl, n-Decyl, i-Decyl, n-Undecyl, i-Undecyl, 2-Methyl-butyl, 2-Ethylbutyl, 2- oder 3-Methyl-pentyl, 2-Ethyl-hexyl, 2-Chlorethyl, 2-Brom-ethyl, 2-Cyan-ethyl, 2-Phenethyl, 3-Chlor-, 3-Brom-, 3-Phenyl-propyl, 2-Hydroxy- oder 2-Phenoxyethyl, 2- oder 3-Hydroxy-propyl, 2- oder 3-Hydroxy-butyl, 2- oder 3-Phenoxy-propyl, 2- oder 3-Phenoxy-butyl, 2,3-Dihydroxy-propyl oder -butyl, 3-Chlor-2-hydroxy-propyl, 2-methoxycarbonyl-ethyl, 3-Methoxycarbonyl-ethyl, 3-Propoxycarbonyl-propyl, 3-i-Propoxycarbonyl-propyl, 4-Butoxybutyl, 2-Phenylcarbonyloxy-ethyl, 5-Phenylcarbonyloxypentyl, 2-Phenoxycarbonyloxy-ethyl, 3-Phenoxycarbonyloxypropyl, 2-Allyloxycarbonyloxy-ethyl, 3-Methallyloxycarbonyloxy-propyl, 4-Propenyloxycarbonyloxy-butyl, 2-(1-, 2- oder 3-Butenyl)-oxycarbonyloxy-ethyl, 2-Methoxycarbonyloxy-ethyl, 3-i-Propoxycarbonyloxy-propyl, 4-Butoxycarbonyloxy-butyl, 2- (2- oder 3-Tetrahydrofurfuryl)-ethyl, 2-(3-Ethyl-tetrahydrofurfur-2-yl)-ethyl, 2-(Tetrahydro-4-pyron-2- oder 3-yl)-ethyl, 3-(2-Ethyl-tetrahydro 4-pyron-3-yl)-propyl, 2-Methoxy-ethyl, 3-Methoxy-propyl, 3-Methoxy-2-methyl-propyl, 2-Ethoxy-ethyl, 3-i-Propoxypropyl, 4-i-Butoxy-2-methyl-propyl, Allyl, Methallyl, Propenyl, Crotyl(=2-Butenyl), 1- oder 3-Butenyl, 2-Hydroxy-3-methoxy-propyl, 2-Hydroxy-3-ethoxy-propyl, 2-Hydroxy-3-i-propoxy-propyl, 2-Hydroxy-3-propoxy-propyl, 2-Hydroxy-3-butoxy-propyl, 2-Hydroxy-3-phenoxy-propyl, 2-Acetoxy-3-methoxy-propyl, 2-Acetoxy-3-ethoxy-propyl, 2-Acetoxy-3-propoxy-propyl, 2-Acetoxy-3-butoxy-propyl, 2-Acetoxy-3-phenoxy-propyl, Methoxy, Ethoxy, n- und i-Propoxy, n- und i-Butoxy, 2-Ethoxy-ethyl, Benzyl, 4-Chlor-, 4-Brom-, 4-Nitro-, 4-Cyan-, 4-Methyl- oder 4-Methoxy-benzyl, 2-, 3- oder 4-Ethoxy-benzyl, 2,3-Dichlorbenzyl, ferner Reste der Formeln: -CH₂CH₂OCH₂CH₂OC₂H₅; -CH₂CH₂OCH₂CH₂OCH₂CH₂OC₂H₅; CH₂CH₂OCH₂CH₂OCH₃; -(CH₂CH₂O)₃-CH₃; -(CH₂CH₂O)₃-n-C₃H₇; -(CH₂CH₂O)₃-i-C₃H₇; -(CH₂CH₂O)₂-nC₄H₉; (CH₂)₃O-(CH₂CH₂O)₂-CH₃; -(CH₂CH₂O)₂-C₆H₅; -CH₂CH₂O-n-C₄H₉; -(CH₂CH₂O)₂-CO-CH₃. Beispiele für weitere geeignete Reste R⁸ und gegebenenfalls R³ und/oder R⁴ sind: 2-Acetoxy-ethyl, 4-Acetoxybutyl, 2-Propionyloxy-ethyl, 2-Butyryloxy-ethyl, 4-Butyryloxy-butyl.

Die Erfindung betrifft auch Verfahren zur Herstellung der erfindungsgemäßen Farbstof fmischung sowie deren Verwendung zum Färben und Bedrucken von hydrophoben Fasermaterialien und deren Mischungen mit natürlichen Faserstoffen.

Es ist bereits bekannt, daß Farbstoffmischungen, die mindestens einen Farbstoff der Formel I bzw. Farbstoffmischungen, die mindestens einen Farbstoff der Formel II enthalten, verbesserte färberische Eigenschaften im Vergleich zu den Einzelfarbstoffen besitzen (vgl. EP 222 255 bzw. DP 28 18 653).

Es wurde nun überraschenderweise gefunden, daß die erfindungsgemäße Farbstoffmischung wesentlich verbesserte färberische Eigenschaften gegenüber den Einzelfarbstoffen und auch gegenüber den Mischungen der DP 28 18 653 und EP 222 255 besitzen.

Bevorzugte Reste in der Formel I und II sind für R¹, R², R⁵ und/oder R⁶ Methyl oder Ethyl und/oder für R³ Wasserstoff, Ethyl oder n-Propyl und/oder für R⁴ Wasserstoff und/oder für R⁷ und/oder R⁸ Ethyl, n-Propyl, Allyl, wobei R⁷ und R⁸ vorzugsweise gleich sind.

In den erfindungsgemäßen Farbstoffmischungen beträgt das Gewichtsverhältnis zwischen den Komponenten I:II = (5 bis 95) : (95 bis 5), vorzugsweise (70 bis 30) : (30 bis 70), besonders bevorzugt (40 bis 60) : (60 bis 40). Die Komponenten I und II können aus einem, zwei, drei oder mehr Farbstoffen der Formel I bzw. II bestehen. Vorzugsweise bestehen die Komponenten I und/oder II aus je zwei Farbstoffen der Formel I bzw. II, ganz besonders bevorzugt aus je einem Farbstoff der Formel I bzw. II. Falls die Komponente I oder II zwei oder mehrere Farbstoffe enthält, kann deren Anteil innerhalb der beiden Komponenten in weiten Grenzen schwanken. Falls die Komponenten I und/oder II vorzugsweise je zwei Farbstoffe enthalten, ist in der Komponente I und/oder II ein Farbstoff vorzugsweise mit 20 bis 80 Gewichtsteilen und der andere mit 80 bis 20 Gewichtsteilen vorhanden.

Die erfindungsgemäßen Farbstoffmischungen enthalten oder bestehen aus den beiden Komponenten I und II. Die vorstehend genannten Gewichtsverhältnisse beziehen sich lediglich auf den aus den Komponenten I und II bestehenden Farbstoffanteil der erfindungsgemäßen Farbstoffmischungen. Die erfindungsgemäßen Farbstoffmischungen können darüber hinaus auch noch Dispergiermittel, Stellmittel und/oder Hilfsmittel etc. und gegebenenfalls noch andere Farbstoffe enthalten.

Die erfindungsgemäßen Farbstoffmischungen können als pulverförmige oder flüssige Farbstoffzubereitungen vorliegen. Die pulverförmigen Farbstoffzubereitungen besitzen normalerweise einen Farbstoffgehalt von 20 bis 60 Gew.%. Der Rest von 20 bis 40 Gew.% besteht aus Stell-und/oder Hilfsmitteln, wie z.B. Dispergiermittel, Netzmittel, Emulgatoren, Konservierungsmitteln, Oxidationsmitteln, Entstaubungsmittel etc. Die in wäßriger Suspension vorliegenden flüssigen Farbstoffzubereitungen besitzen normalerweise einen Farbstoffgehalt von 20 bis 40 Gew.%, einen Stell- und/oder Hilfsmittelgehalt von 20 bis 40 Gew.%, der Rest ist Wasser. Als Hilfsmittel können die flüssigen Farbstoffzubereitungen neben Dispergiermitteln, Emulgatoren und Netzmittel auch noch Eintrocknungsverzögerer, wie z.B. Glykole oder Glyzerin, und/oder Konservierungsmittel, Fungizide etc. enthalten.

Die erfindungsgemäßen Farbstoffmischungen können nach verschiedenen Verfahren hergestellt werden, so z.B. durch Mischen von bereits gefinishten Einzelfarbstoffen I und II oder durch Mischen von ungefinishten Einzelfarbstoffen I und II und anschließendem oder während des Mischvorgangs durchgeführtem Finish. Das Mischen von ungefinishten Einzelfarbstoffen der Komponenten I und II wird vorzugsweise unter zusatz von Dispergiermitteln und gegebenenfalls weiteren Hilfsmitteln durchgeführt. Dieser Mischprozeß erfolgt zweckmäßigerweise im Zusammenhang mit der für den Finish von Dispersionsfarbstoffen durchzuführenden Naßzerkleinerung bei Temperaturen von normalerweise 10 bis 180^{o}C, insbesondere 10 bis 90^{o}C, vorzugsweise 30 bis 60^{o}C, zweckmäßigerweise in geeigneten Mühlen, beispielsweise Kolloid-, Kugel-, Perl- oder Sandmühlen oder Dispersionsknetern, kann aber auch insbesondere bei bereits gefinishten Einzelfarbstoffen in geeigneten Mischern, wie z.B. Taumelmischern, oder durch Mischen mit der Hand oder durch Einrühren in Dispergiermittel oder Färbeflotten oder durch Einarbeiten in Druckpasten bewirkt werden.

Bei der Naßzerkleinerung der Farbstoffe werden die Farbstoffe zusammen mit Dispergiermitteln in einem flüssigen Medium, vorzugsweise in Wasser, aufgeschlämmt und die Mischung der Einwirkung von Scherkräften ausgesetzt. Dabei werden die ursprünglich vorhandenen Farbstoff-Teilchen mechanisch so weit zerkleinert, daß eine optimale spezifische Oberfläche erreicht wird und die Sedimentation der Farbstoffe möglichst gering ist. Die Teilchengröße der Farbstoffe liegt im allgemeinen bei etwa 0,1 bis 10 µm, in vielen Fällen zwischen 0,5 und 5 µm und vorzugsweise bei etwa 1 µm.

Bei der Naßzerkleinerung werden Dispergiermittel mitverwendet. Geeignete Dispergiermittel sind z.B. anionische oder nichtionische Dispergiermittel, die auch gemeinsam eingesetzt werden können. Anionische Dispergiermittel sind z.B. Kondensationsprodukte aus aromatischen Sulfonsäuren und Formaldehyd, insbesondere Kondensationsprodukte aus Alkylnaphthalinsulfonsäuren und Formaldehyd, Kondensationsprodukte aus gegebenenfalls substituiertem Phenol mit Formaldehyd und Natriumbisulfit, Alkalimetallsalze von Kondensationsprodukten aus gegebenenfalls substituiertem Phenol, Naphthalin- bzw. Naphtholsulfonsäuren, Formaldehyd und Natriumbisulfit, Alkalimetallsalze von Kondensationsprodukten aus gegebenenfalls substituierten Phenolsulfonsäuren, Formaldehyd und Harnstoff sowie Alkalimetallsalze von Ligninsulfonsäuren; Alkyl-oder Alkylaryl-sulfonate, sowie Alkyl-aryl-polyglykolethersulfate. Nichtionische Dispergiermittel oder Emulgatoren sind z.B. Umsetzungsprodukte von Alkylenoxiden, wie z.B. Ethylen-oder Propylenoxid mit alkylierbaren Verbindungen, wie z.B. Fettalkoholen, Fettaminen, Fettsäuren, Phenolen, Alkylphenolen, Arylalkylphenolen, Arylalkylarylphenolen und Carbonsäureamiden, wie z.B. Anlagerungsprodukte von 5 bis 10 Ethylenoxid-Einheiten an C₈-C₁₀ Alkylphenole.

Die bei der Naßzerkleinerung erhaltenen Farbstoffdispersionen sollen für die meisten Anwendungsweisen gießbar sein und können auch noch weitere Hilfsmittel enthalten, z.B. solche, die als Oxydationsmittel wirken, wie z.B. Natrium-m-nitrobenzolsulfonat oder fungizide Mittel, wie z.B. Natrium-o-phenyl-phenolat und Natrium-penta-chlorphenolat. Aus ökonomischen Gründen wird ein Farbstoffgehalt von 20 Gew.% meist nicht unterschritten.

Die so erhaltenen flüssigen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten die Farbstoffe, Dispergiermittel und andere Hilfsmittel, wie z.B. Netz-, Oxydations-, Konservierungs- und Entstaubungsmittel.

Ein bevorzugtes Herstellungsverfahren für die pulverförmigen Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Sollen die Farbstoffmischungen für den Textildruck herangezogen werden, so werden die erforderlichen Mengen der Farbstoffeinstellungen zusammen mit Verdickungsmitteln, wie z.B. Alkali-Alginaten oder dergl., und gegebenenfalls weiteren Zusätzen, wie Fixierbeschleunigern, Netzmitteln und Oxydationsmitteln, zu Druckpasten verknetet.

Die Einzelfarbstoffe der Formel I und II sind bekannt (vgl. z.B. DE-B-27 36 785, DE-B-28 33 854 und USP 4 076 498 oder lassen sich in an sich bekannter Weise durch Diazotierung und Kupplung von 6-Brom-2,4-dinitro-anilin oder 6-Chlor-2,4-dinitro-anilin und anschließende Kupplung auf Kupplungskomponenten der Formel Ia 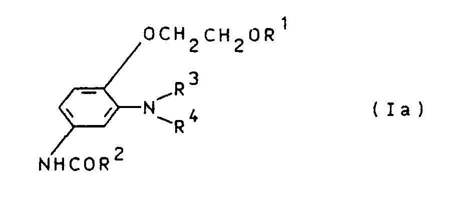
oder der Formel IIa 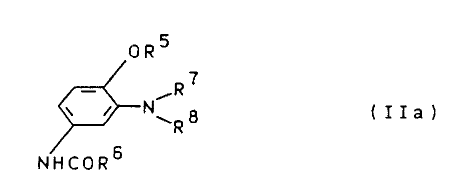
herstellen. Die Kupplungskomponente der Formeln Ia und IIa sind bekannt bzw. lassen sich nach an sich bekannten Verfahren herstellen.

Erfindungsgemäße Farbstoffmischungen können vorzugsweise auch durch Diazotierung und anschließende Kupplung hergestellt werden. Dabei wird entweder ein Gemisch von 6-Brom-2,4-dinitro-anilin und 6-Chlor-2,4-dinitro-anilin gemeinsam diazotiert und anschließend auf eine Mischung zweier verschiedener Kupplungskomponenten der Formeln Ia und IIa gekuppelt, oder es wird eine Diazokomponente (6-Brom-2,4-dinitro-anilin oder 6-Chlor-2,4-dinitro-anilin) diazotiert und anschließend auf eine Mischung zweier verschiedener Kupplungskomponenten der Formeln Ia und IIa gekuppelt. Die Diazotierung und Kupplung erfolgen dabei in an sich bekannter Weise und das Gemisch der Farbstoffe kann wie üblich isoliert, getrocknet, gefinisht und auf eine bereits erwähnte Art und Weise in eine pulver- oder flüssige Zubereitung überführt werden.

Es ist vorteilhaft, die erfindungsgemäßen Farbstoffmischungen aus solchen Einzelfarbstoffen herzustellen, die einer thermischen Vorbehandlung unterzogen worden waren. Bei dieser thermischen Vorbehandlung werden die Farbstoffe gegebenenfalls unter Druck und vorzugsweise in Wasser eine halbe bis mehrere Stunden auf Temperaturen von 50 bis 180^{o}C, insbesondere 50 bis 150^{o}C, vorzugsweise 90 bis 130^{o}C, erhitzt und wieder abgekühlt. Dieses Erhitzen erfolgt vorteilhaft in Gegenwart eines oder mehrerer Dispergiermittel und/oder Emulgatoren und/oder eines oder mehrerer organischer Lösungsmittel. Solche Lösungsmittel sind zum Beispiel Methanol, Ethanol, Dimethylformamid oder Dimethylsulfoxid, vorzugsweise jedoch in Wasser wenig lösliche Lösungsmittel wie Toluol, Chlorbenzol, 1,2-Dichlorbenzol oder Butylacetat. Diese Lösungsmittel werden nach der thermischen Behandlung wieder abdestilliert.

Besonders vorteilhaft ist es, wenn der vorgenannten thermischen Vorbehandlung eine Mischung aus den Farbstoffkomponenten I und II unterzogen wird oder wenn eine Mischung aus den Farbstoffkomponenten I und II im Verlauf ihrer Herstellung auf Temperaturen von 50 bis 180^{o}C, insbesondere 50 bis 150^{o}C, vorzugsweise eine halbe bis mehrere Stunden erhitzt wird. Dadurch wird die erwünschte Bildung von Mischkristallen zwischen den Einzelfarbstoffen veranlaßt. Ein derartiges Erhitzen eines Farbstoffgemischs kann z.B. vor dem Finishvorgang oder auch im Verlauf des Finishvorgangs durchgeführt werden, wobei bezüglich der Anwesenheit von organischen Lösungsmitteln, Dispergiermitteln und/oder Emulgatoren das bereits bei der thermischen Vorbehandlung der Einzelfarbstoffe Ausgeführte gilt.

Die erwünschte Bildung von Mischkristallen zwischen den Einzelfarbstoffen wird auch dadurch bewirkt, daß Einzelfarbstoffe gemeinsam in einem organischen Lösungsmittel, wie z.B. Dimethylformamid, gegebenenfalls unter Erhitzen gelöst und dann aus dieser Lösung auskristallisiert oder ausgefällt werden. Das erhaltene Farbstoffgemisch bzw. die erhaltenen Mischkristalle werden isoliert, z.B. durch Filtration, und von Lösungsmittelresten, z.B. durch Waschen, befreit und auf die bereits genannte Art und Weise gefinisht und in eine Farbstoffzubereitung überführt.

Die erfindungsgemäßen Farbstoffmischungen sind als solche oder auch im Gemisch mit anderen Dispersionsfarbstoffen vorzüglich zum Färben und Bedrucken von hydrophoben synthetischen Fasermaterialien und deren Mischungen mit natürlichen Faserstoffen geeignet. Überraschenderweise sind sie den Einzelfarbstoffen im Hinblick auf färberisches Verhalten und coloristische Echtheiten, wie z.B. Thermomigration, Thermofixierechtheit, Wasser-, Wasch-und Reibechtheit, insbesondere im Aufbau- und Ausziehvermögen und im Egalisiervermögen, überlegen. Außerdem werden bei den erfindungsgemäßen Farbstoffmischungen auch bei einer Herabsetzung der Färbetemperaturen und Verkürzung der Färbezeit noch hervorragend farbstarke Färbungen bei ausgezeichneter Baderschöpfung erhalten. Darüberhinaus sind sie unempfindlich gegenüber Ca-, Mg-, Cu- oder Fe-Ionen, die bei anderen Farbstoffen Ausfällungen bewirken. Mit den erfindungsgemäßen Farbstoffmischungen erhält man auch bei ungünstigen maschinellen oder substratmäßigen Färbebedingungen bereits bei kurzer Färbezeit exakte blaue Färbungen. Dies ist besonders wichtig bei der Anwendung in der Wickelkörper-Färberei. Die Verwendung der erfindungsgemäßen Farbstoffmischungen kann für sich (d.h. im Blau-Bereich) sowie auch in Kombination mit handelsüblichen anderen Farbstoffen, auch anderer Nuancen (Trichromie) erfolgen.

Als hydrophobe synthetische Materialien kommen z.B. in Betracht: Cellulose-2 1/2-Acetat, Cellulosetriacetat, Polyamide und besonders hochmolekulare Polyester und deren Mischungen mit natürlichen Faserstoffen, wie z.B. Baumwolle, regenerierte Cellulosefasern oder Wolle.

Als hochmolekulare Polyesterfasern kommen insbesondere solche auf der Basis von Polyethylenterephthalat, Polybutylenterephthalat, Polycylohexylenterephthalat oder Polyhydroxypropylenterephthalat in Betracht, sowie modifizierte Polyesterfasern, wie sie z.B. durch Copolymerisation mit Di- oder Triethylenglykol, Polyethylenglykol, Glyzerin, Isophthalsäure oder Phosphorverbindungen erhalten werden.

In Mischungen hydrophober Faserstoffe mit Wolle, Regeneratcellulose oder Baumwolle kann der Anteil des hydrophoben Materials, insbesondere des Polyesters, 10 bis 90 Gew.%, insbesondere 30 bis 70 Gew.%, betragen.

Zur Herstellung der Färbeflotten werden die erforderlichen Mengen der Farbstoffeinstellungen mit dem Färbemedium, vorzugsweise mit Wasser, so weit verdünnt, daß sich für die Färbung ein Flottenverhältnis von 1 : 5 bis 1 : 50 ergibt. Zusätzlich werden den Flotten im allgemeinen weitere Färbereihilfsmittel, wie Dispergier-, Netz- und Fixierhilfsmittel, zugesetzt.

Die zu färbenden oder zu bedruckenden Materialien können z.B. in Form von flächen-, flocken-oder fadenförmigen Gebilden vorliegen und z.B. zu Garnen oder gewebten oder gestrickten Textilstoffen verarbeitet sein. Das Färben des genannten Fasergutes mit den erfindungsgemäßen Farbstoffmischungen erfolgt in an sich bekannter Weise, vorzugsweise aus wäßriger Suspension, gegebenenfalls in Gegenwart von Carriern, zwischen 80 bis ca. 125^{o}C nach dem Ausziehverfahren, oder in Abwesenheit von Carriern nach dem HT-Verfahren im Färbeautoklav bei etwa 105 bis 140^{o}C, sowie nach dem sogenannten Thermosolverfahren, wobei die Ware mit der Färbeflotte geklotzt und anschließend bei etwa 175 bis 230^{o}C fixiert wird. Das Bedrucken der genannten Materialien kann so durchgeführt werden, daß die mit erfindungsgemäßen Farbstoffmischungen enthaltenden Druckpasten bedruckte Ware zur Fixierung des Farbstoffs, gegebenenfalls in Gegenwart eines Carriers, bei Temperaturen zwischen ca. 110 bis 230^{o}C mit HT-Dampf, Druckdampf oder Trockenhitze behandelt wird.

An die eigentliche Färbung kann sich vorteilhaft eine reduktive oder eine durch Dispergiermittel unterstützte Nachbehandlung zur Entfernung nicht restlos fixierter Farbstoffanteile anschließen.

Bei Einsatz von Mischungen aus Polyesterfasern mit Wolle, Baumwolle oder Regeneratzellulose kann die zugemischte Faser vor oder nach der Polyesterfärbung mit geeigneten Farbstoffen im gleichen oder abweichenden Farbton (Melangen, Webmuster) gefärbt werden.

In erfindungsgemäßen Farbstoffmischungen werden die Einzelfarbstoffe I und II zweckmäßigerweise so zusammengestellt, daß man einen Farbstoff, der z.B. unter Glühlampenlicht einen roten Farbtonumschlag zeigt, mit einem Farbstoff, der z.B. unter Glühlampenlicht einen grünen Farbtonumschlag zeigt, kombiniert. Auf diese Weise kann aus verschiedenen Mischungspartnern eine gezielte Einstellung der Abendfarbe durchgeführt werden.

Besonders bevorzugte Farbstoffmischungen sind solche, die
I) den Farbstoff der Formel III 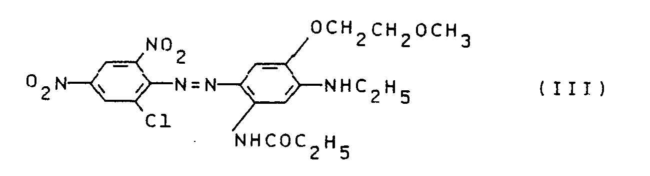 und
II) den Farbstoff der Formel IV 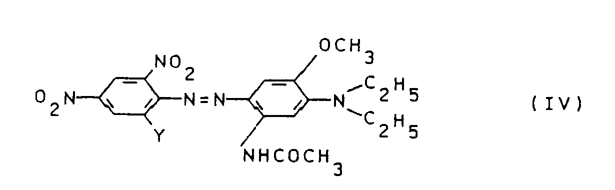 im Gewichtsverhältnis I : II = (60 bis 40) : (40 bis 60), vorzugsweise 1 : 1, enthalten oder aus diesen Farbstoffen bestehen, wobei Y Chlor oder Brom, vorzugsweise Brom, bedeutet.

Bevorzugt sind auch solche erfindungsgemäßen Farbstoffmischungen, die
I) den Farbstoff der Formel III 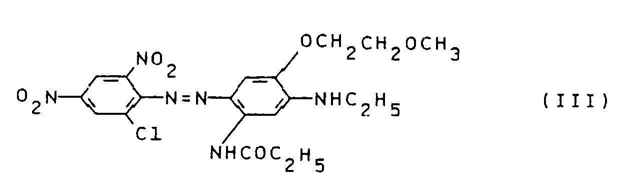
   Ia) den Farbstoff der Formel V 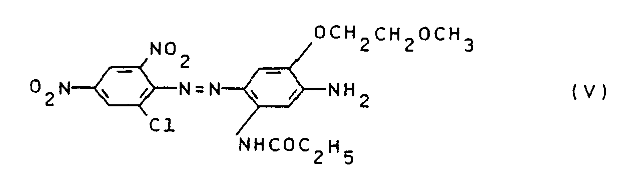
II) den Farbstoff der Formel IV 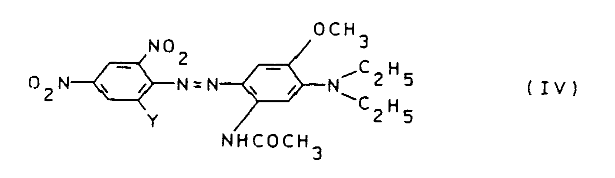 wobei Y Chlor oder Brom₁ vorzugsweise Brom, bedeutet, im Gewichtsverhaltnis (I + Ia) : II = (60 bis 40) : (40 bis 60) enthalten oder aus ihnen bestehen, wobei das Gewichtsverhältnis I : Ia = (80 bis 20) : (20 bis 80) beträgt.

Weiterhin sind auch solche erfindungsgemaßen Farbstoffmischungen bevorzugt, die
I) den Farbstoff der Formel III 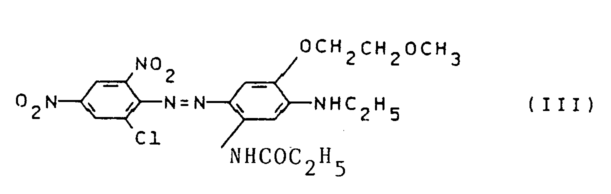 und
II) den Farbstoff der Formel VI 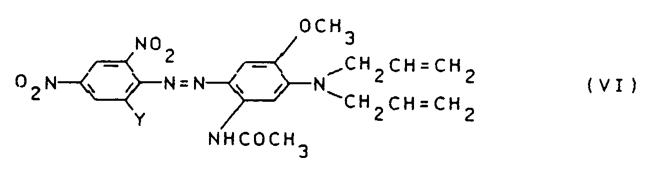 wobei Y Chlor oder Brom, vorzugsweise Brom, bedeutet, im Gewichtsverhältnis I : II = (60 bis 40) : (40 bis 60) enthalten oder aus diesen Farbstoffen bestehen.

Die in den nachfolgenden Beispielen genannten Teile sind, soweit nichts anderes angegeben ist, Gewichtsteile, und Prozentangaben bedeuten Gewichtsprozente.

### Beispiel 1:

a) 217,5 Teile 6-Chlor-2,4-dinitro-anilin werden in 2000 Teile konzentrierte Schwefelsäure eingetragen. Unter Rühren und Kühlung läßt man bei 15 bis 20^{o}C 320 Teile Nitrosylschwefelsäure (11,5 % N₂O₃) langsam zulaufen und rührt mindestens 3 Stunden bei 15^{o}C nach.
   266 Teile 2-Ethylamino-4-propionylamino-5-(2-methoxy)-ethoxy-benzol werden in ein Gemisch von 2000 Teilen Wasser, 300 Volumenteilen konzentrierter Salzsäure und 10 Teilen Amidosulfonsäure gegeben. Man fügt 4000 Teile Eis zu und läßt unter gutem Rühren die unter a) bereitete Diazoniumsalzlösung bei -5 bis +3^{o}C langsam zulaufen. Durch Zugabe von Natriumacetat bis zu einem pH-Wert von 3 wird die Umsetzung vervollständigt. Der erhaltene Farbstoff wird abgesaugt, mit Wasser neutral und salzfrei gewaschen und getrocknet. Man erhält 418 Teile des Farbstoffs der Formel III 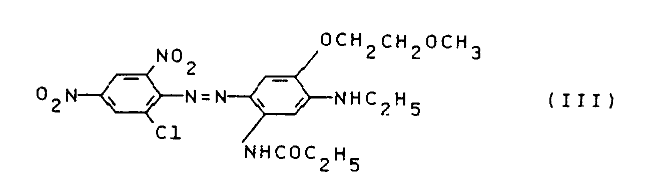
b) 262 Teile 6-Brom-2,4-dinitro-anilin werden in 2000 Teile konzentrierte Schwefelsäure eingetragen. Verfährt man im übrigen wie im Beispiel 1a) angegeben, so erhält man eine Diazoniumsalzlösung von 6-Brom-2,4-dinitroanilin.
   244 Teile 3-N,N-Diethylamino-4-methoxyacetanilid werden in ein Gemisch von 700 Teilen Wasser, 300 Teilen Eis, 70 Teilen konz. Schwefelsäure und 10 Teilen Amidosulfosäure gegeben. Unter gleichmäßiger Zugabe von 5000 Teilen Eis läßt man nun bei ca. 10^{o}C die Diazoniumsalzlösung zulaufen, wobei man durch Zugabe von 27%iger Natronlauge den pH-Wert bei ca. 2 hält. Nach beendeter Kupplung wird der erhaltene Farbstoff abgesaugt, mit Wasser neutral und salzfrei gewaschen und getrocknet. Man erhält 450 Teile des Farbstoffs der Formel IVa 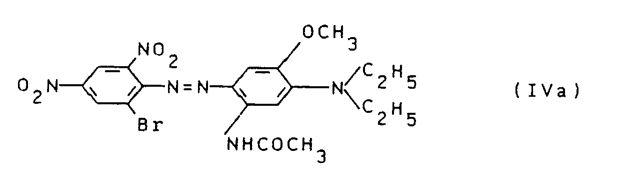
c) Aus 20 Teilen des Farbstoffs der Formel III, 20 Teilen des Farbstoffs der Formel IVa und 60 Teilen eines Dispergiermittels aus der Reihe der Ligninsulfonate stellt man durch wäßriges Vermahlen in einer Perlmühle eine feine Farbstoffdispersion her und trocknet diese durch Sprühtrocknung. Die Farbstoffzubereitung enthält die Farbstoffe der Formeln III und IVa im Gewichtsverhältnis 1 : 1.
d) 2,2 g der so erhaltenen Farbstoffzubereitung werden in 2000 g Wasser dispergiert. Die Dispersion wird mit 4 g Ammoniumsulfat, 2 g eines handelsüblichen Dispergiermittels auf Basis eines Kondensationsproduktes aus Naphthalinsulfonsäurenatriumsalz und Formaldehyd und 2 g eines Kondensationsprodukts aus m-Kresol, Formaldehyd und Natriumsulfit versetzt und mit Essigsäure auf einen pH-Wert von 5,5 gestellt. In die so erhaltene Färbeflotte bringt man 100 g eines texturierten Polyestergewebes auf Basis Polyethylenglykolterephthalat ein und färbt 30 Minuten bei 120^{o}C. Nach anschließendem Spülen, reduktiver Nachbehandlung mit einer 0,2%igen Natriumdithionitlösung während 15 Minuten bei 70 bis 80^{o}C, Spülen und Trocknen, erhält man eine farbstarke blaue Färbung mit hervorragenden coloristischen Eigenschaften.

Bringt man zur Herstellung eines Nachzugs in das Färbebad nochmals 100 g eines texturierten Polyestergewebes auf Basis Polyethylenglykolterephthalat ein und färbt 1 Stunde bei 135^{o}C und behandelt den Nachzug wie vorstehend bei der eigentlichen Färbung angegeben nach, so erhält man eine nahezu farblose Färbung.

### Beispiel 2

a) 217,5 Teile 6-Chlor-2,4-dinitro-anilin werden wie unter 1a) diazotiert und analog auf eine Mischung von 59,5 Teilen 2-Amino-4-propionylamino-5(2-methoxy)-ethoxybenzol und 199,5 Teilen 2-Ethylamino-4-propionylamino-5-(2-methoxy)-ethoxy-benzol gekuppelt. Man erhält eine Farbstoffmischung, die 25 Teile des Farbstoffs der Formel V 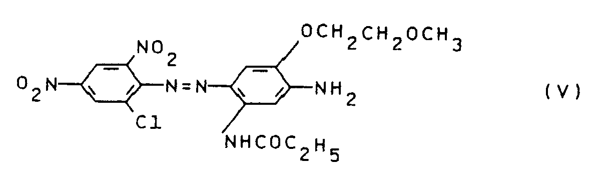 und 75 Teile des Farbstoffs der Formel III enthält.
b) Man stellt, wie in Beispiel 1 beschrieben, aus 24 Teilen der erhaltenen Farbstoffmischung und 16 Teilen des Farbstoffs der Formel IVa und 60 Teilen eines praxisüblichen Dispergiermittels aus der Reihe der sulfonierten Naphthalin-Formaldehyd-Kondensationsprodukte durch wäßriges Vermahlen in einer Perlmühle eine feine Farbstoffdispersion her und trocknet diese anschließend durch Sprühtrocknung. In der so erhaltenen Farbstoffzubereitung beträgt das Gewichtsverhältnis der Farbstoffe der Formeln III : V : IVa = 45 : 15 : 40.
c) 0,2 g dieses Farbstoffpulvers werden in 200 ml Wasser eingerührt und unter Rühren mit 0,2 g eines handelsüblichen Dispergiermittels auf Basis eines Kondensationsprodukts aus m-Kresol, Formaldehyd und Natriumsulfit, 0,3 g eines handelsüblichen Carriers auf Basis von Methylnaphthalin, 0,4 g Natriumacetat krist. sowie 1,2 ml 30%ige Essigsäure versetzt. Der pH-Wert des Färbebads beträgt 4,5. In dieses Färbebad werden 10 g eines Polyestergewebes auf Basis von Polyethylenglykolterephthalat eingebracht und in einer Färbebombe unter Druck eine Stunde bei 106^{o}C gefärbt. Man stellt, wie vorstehend beschrieben, durch Spülen, reduktive Nachbehandlung, erneutes Spülen und Trocknen fertig und und erhält ebenfalls eine farbstarke blaue Färbung mit sehr guten coloristischen Echtheiten.

### Beispiel 3

a) Ersetzt man in Beispiel 1c) die 20 Teile des Farbstoffs der Formel IVa durch 20 Teile des Farbstoffs der Formel VI 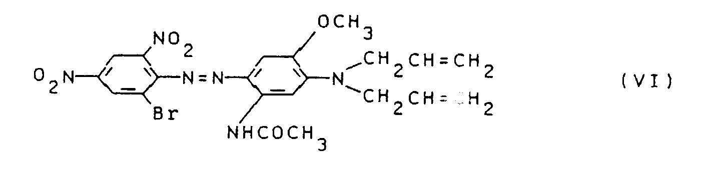 der analog den Angaben in Beispiel 1 b) aus 262 Teilen 2-Brom-2,4-dinitranilin und 269 Teilen 3-N,N-Diallylamino-4-methoxy-acetanilid hergestellt wird ,so erhält man ebenfalls eine pulverförmige Farbstoffzubereitung, welche die Farbstoffe der Formeln III und VI im Gewichtsverhältnis 1 : 1 enthält.
b) Mit der hergestellten Farbstoffzubereitung wird eine Färbung gemäß Beispiel 1d) durchgeführt. Dabei wird jedoch anstelle des in Beispiel 1d) genannten Polyestergewebes ein Mischgewebe aus 50 g Polyester-Faser und 50 g Baumwolle oder Regeneratcellulosefasern eingesetzt und im übrigen wie im Beispiel 1d) verfahren, erhält man auf dem Polyester-Anteil eine tiefblaue Färbung bei nur geringer Anfärbung des Baumwoll- bzw. Regeneratcellulosefaseranteils.

Durch eine Nachbehandlung während 15 Minuten bei 80^{o}C mit einer wäßrigen Flotte, welche eine übliche Menge Natriumdithionit und Natronlauge enthält, wird der Baumwoll-bzw. Regeneratcellulosefaser-Anteil völlig entfärbt.

### Beispiel 4

Ersetzt man das im Beispiel 1d) genannte Polyestergewebe auf Basis Polyethylenglykolterephthalat durch ein Gewebe einer handelsüblichen Polyester-Faser eines beliebigen anderen Typs, so erhält man ein gleich gutes Färberesultat.

### Beispiel 5

Führt man gemäß den Angaben des Beispiels 1 die Färbung mit einem Polyester-Faser-Wickelkörper (Muff mit einer Wickeldichte von 300 g/l) so durch, daß man mit einseitiger Flottenzirkulation von innen nach außen und mit einem Färbeflottendurchsatz von 10 1.kg⁻¹.min⁻¹ mit einer Aufheizgeschwindigkeit zwischen 60 und 130^{o}C von 2^{o}/min und mit einer Färbedauer bei 130^{o}C von 15 min arbeitet, so erhält man eine völlig egale Färbung.

## Patentansprüche

1. Farbstoffmischung enthaltend oder bestehend aus
I: mindestens einem Farbstoff der Formel I 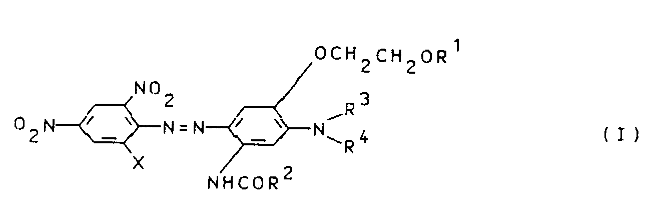
II: mindestens einem Farbstoff der Formel II 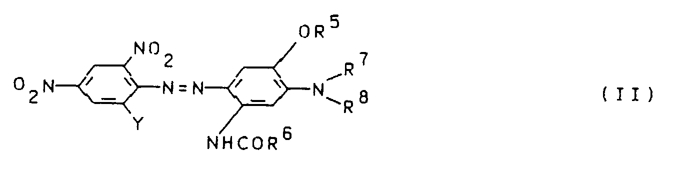 worin
X und Y gleich oder verschieden sind und Chlor oder Brom,
R¹ und R⁵ gleich oder verschieden sind und Methyl oder Ethyl,
R² und R⁶ gleich oder verschieden sind und Methyl, Ethyl, n-Propyl oder i-Propyl,
R³ und R⁴ gleich oder verschieden sind und Wasserstoff oder einen der unter R⁸ aufgeführten Reste,
R⁷ und R⁸ gleich oder verschieden sind und C₁- bis C₁₁-Alkyl, das gegebenenfalls durch Chlor, Brom, Cyan, Phenyl, Phenoxy, Hydroxy, (C₁- bis C₄-Alkoxy)-carbonyl, Phenylcarbonyloxy, (C₃- bis C₅-Alkenyloxy)-carbonyloxy, (C₁- bis C₄-Alkoxy)-carbonyloxy, Phenoxy-carbonyloxy, Tetrahydrofurfuryl, (C₁- bis C₄-Alkyl-tetrahydrofurfuryl, Tetrahydropyronyl oder (C₁- bis C₄-Alkyl)-tetrahydropyronyl substituiert und/oder gegebenenfalls durch 1 - 3 O-Atome unterbrochen sein kann; C₁- bis C₄-Alkoxy; C₃- oder C₄-Alkenyl; Cyclohexyl; gegebenenfalls durch Chlor, Brom, Nitro, Cyan, C₁-bis C₄-Alkyl oder Alkoxy substituiertes Benzyl,
R⁸ darüber hinaus auch noch (C₁ bis C₄-Alkyl)-carbonyloxy-(C₁ bis C₁₁)alkyl,
bedeuten und wobei das Gewichtsverhältnis zwischen den Komponenten I : II = (5 bis 95) : (95 bis 5) beträgt.

2. Farbstoffmischung nach Anspruch 1, dadurch gekennzeichnet, daß R¹, R², R⁵ und/oder R⁶ Methyl oder Ethyl und/oder R³ Wasserstoff, Ethyl oder n-Propyl und/oder R⁴ Wasserstoff und/oder R⁷ und/oder R⁸ Ethyl, n-Propyl oder Allyl bedeuten, wobei R⁷ und R⁸ vorzugsweise gleich sind.

3. Farbstoffmischung nach Anspruch 1 und/oder 2, dadurch gekennzeichnet, daß das Gewichtsverhältnis zwischen den Komponenten I : II = (70 bis 30) : (30 bis 70), vorzugsweise (40 bis 60) : (60 bis 40), beträgt.

4. Farbstoffmischung nach einem oder mehreren der Ansprüche 1 bis 3, dadurch gekennzeichnet, daß sie
I) den Farbstoff der Formel III 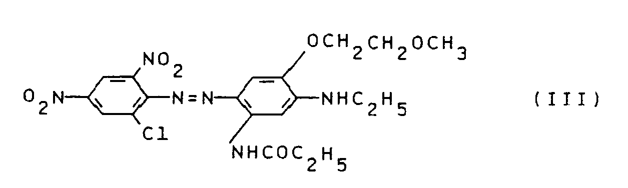 und
II) den Farbstoff der Formel IV 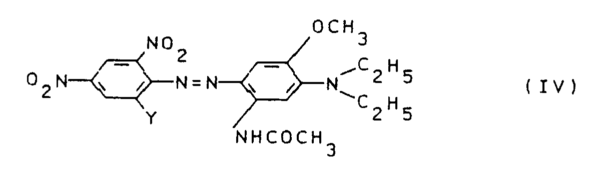 im Gewichtsverhältnis I:II = (60 bis 40) : (40 bis 60), vorzugsweise 1 : 1, enthält oder aus diesen Farbstoffen besteht, wobei Y Chlor oder Brom, vorzugsweise Brom, bedeutet.

5. Farbstoffmischung nach einem oder mehreren der Ansprüche 1 bis 3, dadurch gekennzeichnet, daß sie
I) den Farbstoff der Formel III 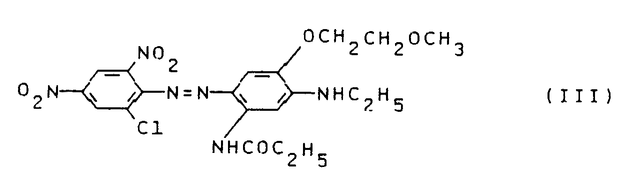
Ia) den Farbstoff der Formel V 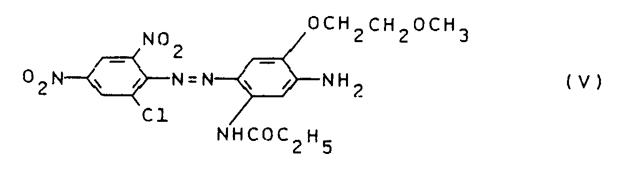
II) den Farbstoff der Formel IV 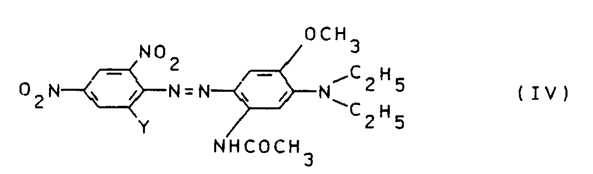 im Gewichtsverhältnis (I + Ia) : II = (60 bis 40) : (40 bis 60) enthält oder aus diesen Farbstoffen besteht, wobei das Gewichtsverhältnis I : Ia = (80 bis 20) : (20 bis 80) beträgt und Y Chlor oder Brom, vorzugsweise Brom, bedeutet.

6. Farbstoffmischung nach einem oder mehreren der Ansprüche 1 bis 3, dadurch gekennzeichnet, daß sie
I) den Farbstoff der Formel III 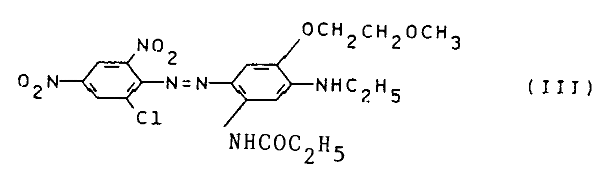 und
II) den Farbstoff der Formel VI 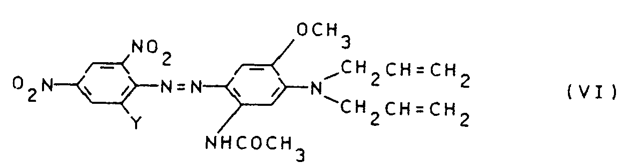 wobei Y Chlor oder Brom, vorzugsweise Brom, bedeutet, im Gewichtsverhältnis I : II = (60 bis 40) : (40 bis 60) enthält oder aus diesen Farbstoffen besteht.

7. Verfahren zur Herstellung einer Farbstoffmischung eines oder mehrerer der Ansprüche 1 bis 6, dadurch gekennzeichnet, daß bereits gefinishte Einzelfarbstoffe der Komponenten I und II miteinander gemischt oder daß ungefinishte Einzelfarbstoffe der Komponenten I und II miteinander gemischt und anschließend gemeinsam gefinisht werden.

8. Verfahren zur Herstellung einer Farbstoffmischung eines oder mehrerer der Ansprüche 1 bis 6, dadurch gekennzeichnet, daß 6-Brom-2,4-dinitro-anilin und/oder 6-Chlor-2,4-dinitro-anilin diazotiert und anschließend auf eine Mischung zweier verschiedener Kupplungskomponenten der Formeln Ia und IIa 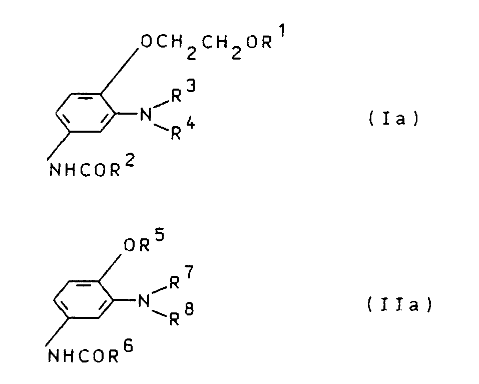 gekuppelt wird.

9. Verfahren zum Färben und Bedrucken von Synthesefasern, dadurch gekennzeichnet, daß eine Farbstoffmischung nach einem oder mehreren der Ansprüche 1 bis 6 eingesetzt wird.

## Claims

1. Dyestuff mixture containing or consisting of
I: at least one dyestuff of the formula I
II: at least one 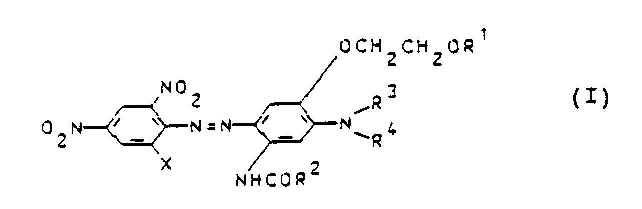 dyestuff of the formula II 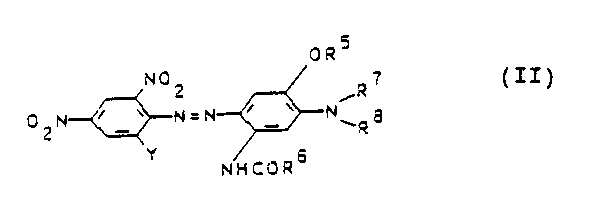 wherein
X and Y are identical or different and denote chlorine or bromine,
R¹ and R⁵ are identical or different and denote methyl or ethyl,
R² and R⁶ are identical or different and denote methyl, ethyl, n-propyl or i-propyl,
R³ and R⁴ are identical or different and denote hydrogen or one of the radicals listed under R⁸, and R⁷ and R⁸ are identical or different and denote C₁- to C₁₁-alkyl, which can optionally be substituted by chlorine, bromine, cyano, phenyl, phenoxy, hydroxy, (C₁- to C₄-alkoxy)-carbonyl, phenylcarbonyloxy, (C₃- to C₅-alkenyloxy)-carbonyloxy, (C₁- to C₄-alkoxy)carbonyloxy, phenoxycarbonyloxy, tetrahydrofurfuryl, (C₁- to C₄-alkyl-tetra-hydrofurfuryl, tetrahydropyronyl or (C₁- to C₄-alkyl)-tetrahydropyronyl, and/or can optionally be interrupted by 1 to 3 oxygen atoms; C₁- to C₄-alkoxy; C₃- or C₄-alkenyl; cyclohexyl, or benzyl which is optionally substituted by chlorine, bromine, nitro, cyano, C₁- to C₄-alkyl or alkoxy, and R⁸ can additionally also denote (C₁- to C₄-alkyl)-carbonyloxy-(C₁- to C₁₁)alkyl, and wherein the weight ratio between the components I : II = (5 to 95) : (95 to 5).

2. Dyestuff mixture according to Claim 1, characterized in that R¹, R², R⁵ and/or R⁶ denote methyl or ethyl and/or R³ denotes hydrogen, ethyl or n-propyl and/or R⁴ denotes hydrogen and/or R⁷ and/or R⁸ denotes ethyl, n-propyl or allyl, R⁷ and R⁸ preferably being identical.

3. Dyestuff mixture according to Claim 1 and/or 2, characterized in that the weight ratio between the components I : II = (70 to 30 ) : (30 to 70), preferably (40 to 60) : (50 to 40).

4. Dyestuff mixture according to one or more of Claims 1 to 3, characterized in that it contains
I) the dyestuff of the formula III 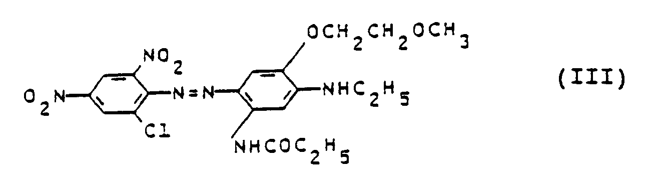 and
II) the dyestuff of the formula IV 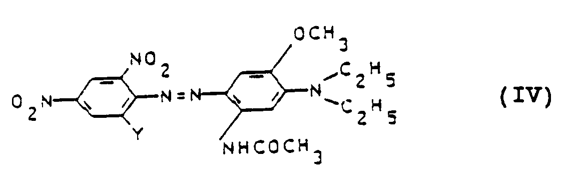 in the weight ratio of I : II = (60 to 40) : (40 to 60), preferably 1 : 1, or consists of these dyestuffs, wherein Y denotes chlorine or bromine, preferably bromine.

5. Dyestuff mixture according to one or more of Claims 1 to 3, characterized in that it contains
I) the dyestuff of the formula III 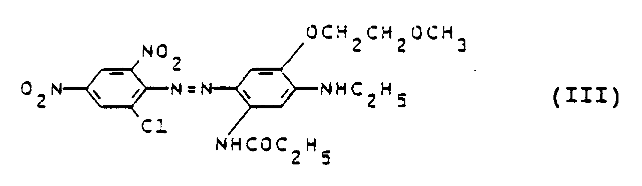
Ia) the dyestuff of the formula V 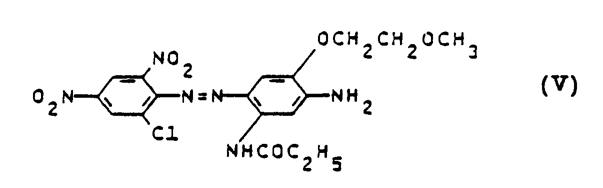
II) the dyestuff of the formula IV 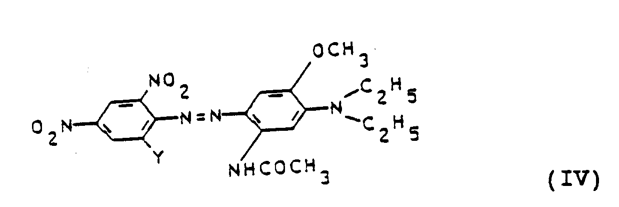 wherein Y denotes chlorine or bromine, preferably bromine, in the weight ratio of (I + Ia) : II = (60 to 40) : (40 to 60) or consists of these dyestuffs, the weight ratio of I : Ia being (80 to 20) : (20 to 80).

6. Dyestuff mixture according to one or more of Claims 1 to 3, characterized in that it contains
I) the dyestuff of the formula III 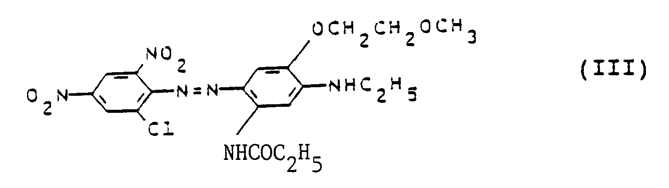 and
II) the dyestuff of the formula VI 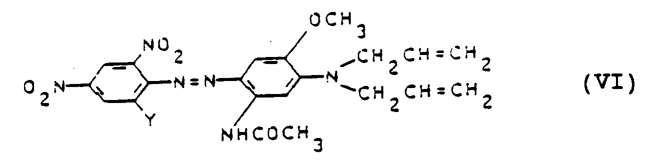 wherein Y denotes chlorine or bromine, preferably bromine, in the weight ratio of I : II = (60 to 40) : (40 to 60) or consists of these dyestuffs.

7. Process for the preparation of a dyestuff mixture of one or more of Claims 1 to 6, characterized in that already finished individual dyestuffs of components I and II are mixed with one another or in that non-finished individual dyestuffs of components I and II are mixed with one another and then finished together.

8. Process for the preparation of a dyestuff mixture of one or more of Claims 1 to 6, characterized in that 6-bromo-2,4-dinitro-aniline and/or 6-chloro-2,4-dinitro-aniline are diazotized and then coupled to a mixture of two different coupling components of the formulae Ia and IIa

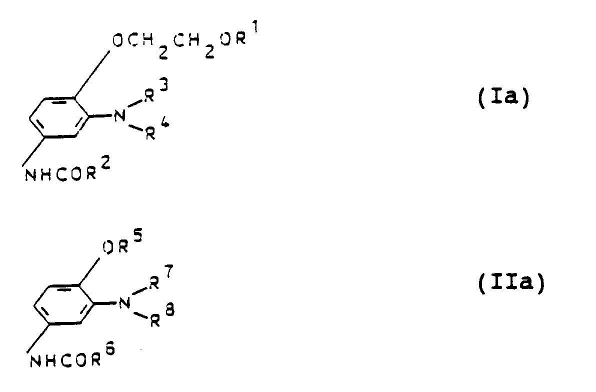

9. Process for dyeing and printing synthetic fibres, characterized in that a dyestuff mixture according to one or more of Claims 1 to 6 is employed.

## Revendications

1. Mélange de colorants contenant ou composé de
I : au moins un colorant de formule I 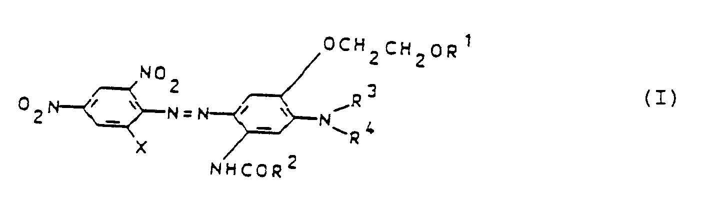
II : au moins un colorant de formule II 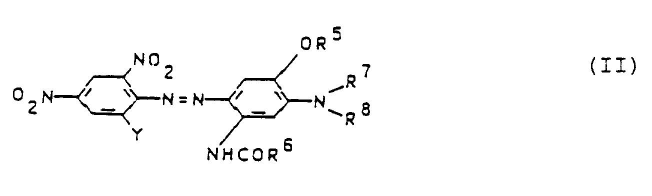 où
X et Y sont identiques ou différents et sont le chlore ou le brome,
R¹ et R⁵ sont identiques ou différents et sont le méthyle ou l'éthyle,
R² et R⁶ sont identiques ou différents et sont le méthyle, l'éthyle, le n-propyle ou l'isopropyle, R³ et R⁴ sont identiques ou différents et sont
l'hydrogène ou un des radicaux cités sous R⁸,
R⁷ et R⁸ sont identiques ou différents et sont un alkyle en C₁-C₁₁, qui peut être substitué éventuellement par le chlore, le brome, le cyano, le phényle, le phénoxy, l'hydroxy, un (alcoxy en C₁-C₄)-carbonyle, le phénylcarbonyloxy, un (alcényloxy en C₃-C₅)-carbonyloxy, un (alcoxy en C₁-C₄)-carbonyloxy, un phénoxycarbonyloxy, le tétrahydrofurfuryle, un (alkyle en C₁-C₄₎₋tétrahydrofurfuryle, le tétrahydropyronyle ou un (alkyle en C₁-C₄)-tétrahydropyronyle et/ou peut être éventuellement interrompu par 1 à 3 atomes d'oxygène ; un alcoxy en C₁-C₄ ; un alcényle en C₃ ou C₄ ; le cyclohexyle ; un benzyle éventuellement substitué par le chlore, le brome, le nitro, le cyano, un alcoxy ou un alkyle en C₁-C₄,
R⁸ peut en outre signifier aussi un (alkyle en C₁-C₄)-carbonyloxy-(alkyle en C₁-C₁₁),
et le rapport pondéral entre les composants étant I : II = (5 à 95) : (95 à 5)

2. Mélanges de colorants selon la revendication 1, caractérisés en ce que R¹, R², R⁵ et/ou R⁶ signifient le méthyle ou l'éthyle et/ou R³ l'hydrogène, l'éthyle ou le n-propyle et/ou R⁴ l'hydrogène et/ou R⁷ et/ou R⁸ l'éthyle, le n-propyle ou l'allyle, R⁷ et R⁸ étant de préférence identiques.

3. Mélanges de colorants selon la revendication 1 et/ou 2, caractérisés en ce que les rapports pondéraux entre les composants I:II = (70 à 30) : (30 à 70), de préférence de (40 à 60) : (60 à 40).

4. Mélanges de colorants selon une ou plusieurs des revendications 1 à 3, caractérisés en ce qu'ils contiennent
I) le colorant de formule III 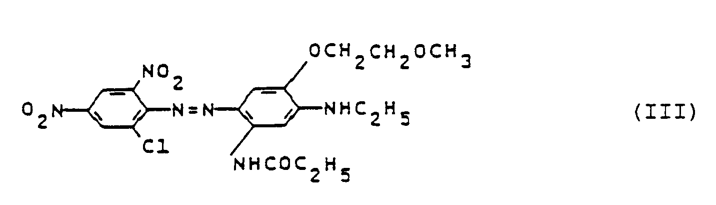 et
II) le colorant de formule IV 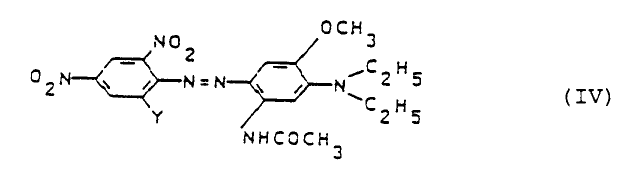 dans un rapport en poids I:II = (60 à 40) : (40 à 60), de préférence 1:1, ou se composent de ces colorants, Y signifiant le chlore ou le brome, de préférence le brome.

5. Mélanges de colorants selon une ou plusieurs des revendications 1 à 3, caractérisés en ce qu'ils contiennent
I) le colorant de formule III 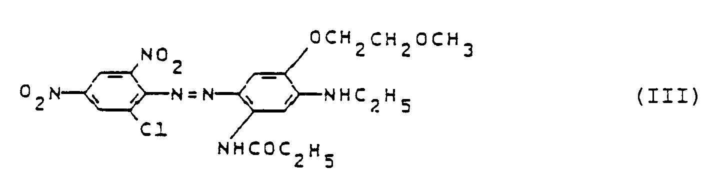 et
Ia) le colorant de formule V 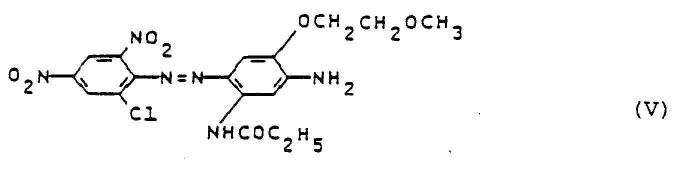
II) le colorant de formule IV 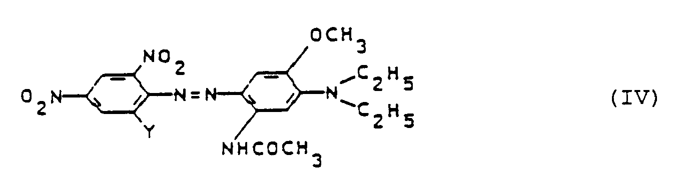 en un rapport molaire (I + Ia):II = (60 à 40) : (40 à 60) ou se composent de ces colorants, les rapports en poids de I:Ia = (80 à 20) : (20 à 80) et Y étant le chlore ou le brome, de préférence le brome.

6. Mélanges de colorants selon une ou plusieurs des revendications 1 à 3, caractérisés en ce qu'ils contiennent
I) le colorant de formule III 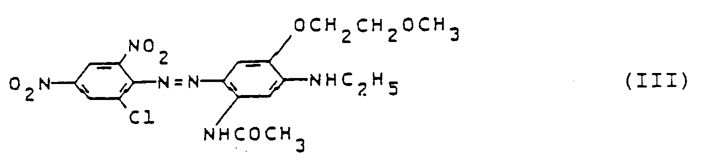 et
II) le colorant de formule VI 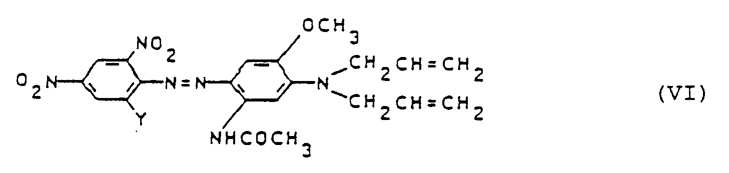 où Y signifie le chlore ou le brome, de préférence le brome, en un rapport en poids de I:II = (60 à 40) : (40 à 60) ou qui se composent de ces colorants.

7. Procédé pour la préparation de mélanges de colorants selon une ou plusieurs des revendications 1 à 8, caractérisé en ce qu'on mélange l'un à l'autre des colorants individuels des composants I et II déjà finis, ou en ce qu'on mélange les colorants individuels des composants I et II non encore finis et en ce qu'on procède ensuite conjointement à leur finition.

8. Procédé pour la préparation de mélanges de colorants selon une ou plusieurs des revendications 1 à 6, caractérisé en ce qu'on diazote la 6-bromo-2,4-dinitro-aniline et/ou la 6-chloro-2,4-dinitroaniline et ensuite on copule sur un mélange de deux composants de copulation différents de formules Ia et IIa

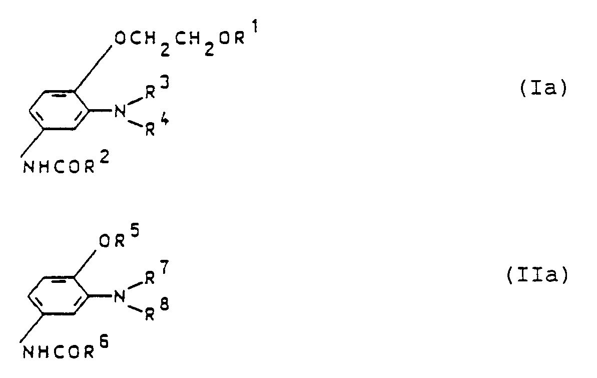

9. Procédé pour la teinture et l'impression de fibres synthétiques caractérisé en ce qu'on utilise un mélange de colorants selon une ou plusieurs des revendications 1 à 6.
